# EUROPEAN PATENT SPECIFICATION

(11) **EP 2 639 081 B1**
(45) Date of publication and mention of the grant of the patent: **01.03.2017**
(21) Application number: 13158825.3
(22) Date of filing: 12.03.2013
(51) Int. Cl.: B60C 9/00, B60C 9/20

(54) **Cord comprising fibers fused together by a solution of isocyanate and a pneumatic tire comprising said cord**
Kord mit durch eine isocyanate Lösung geschmolzenen Fasern und pneumatischer Reifen damit
Corde comprenant des fibres fusionnées par une solution d'isocyanate et pneumatique comprenant ladite corde

(30) Priority: 14.03.2012 US 201261610538 P
(43) Date of publication of application: 18.09.2013
(73) Proprietor: The Goodyear Tire & Rubber Company, Akron, Ohio 44316 (US)
(72) Inventor: Beck, Raphael, L-8558 Reichlange (LU); Hardy, Anthony, L-7730 Colmar-Berg (LU); Imhoff, Serge Julien Auguste, L-9184 Schrondweiler (LU); Maus, Peter Cornelius, B-4760 Bullingen (BE); Mruk, Ralf, L-9164 Lipperscheid (LU); Tahon, Julia Martine Francoise Claudine, L-7595 Reckange (LU)
(74) Representative: Kutsch, Bernd

(56) References cited:
- EP-A1- 1 854 917
- WO-A1-96/32529
- US-A- 4 680 228

## Description

### Background

The treads of pneumatic tires such as radial medium truck (RMT) tires are subject to puncture from stones and other sharp objects in a road surface. In many cases, although the puncture is not deep enough to penetrate the belt package and destroy the tire, it is deep enough to expose the steel reinforcement cords of the belt package to water and air, and such exposure can cause the belt package to corrode. This problem is aggravated when tires are used in mixed service, i.e., partially on paved surfaces and partially on non-paved surfaces. Although rust does not significantly affect the strength of the reinforcement ply, many tires are scrapped if excessive corrosion is observed on the top belt when the tread is skived from the tire in preparation for retreading. Further, punctures in the top steel belt may complicate the retreading process, due to the difficulty in removing the fretted steel cord from the puncture area.

EP-A-1 854 917 describes a tire comprising reinforcing polyester cords.

WO-A- 96/32529 describes a tire cord and a tire comprising such a cord wherein a polymer substrate such as an organic polymer cord comprising polyester is treated with isocyanate.

### Summary

The invention is directed to a cord in accordance with claim 1.

Dependent claims refer to preferred embodiments of the invention.

### Brief Description of the Drawings

Figure 1 is a cross-sectional view of an embodiments of a pneumatic tire made in accordance with the present invention;
Figure 2 is a representation of a top breaker used in a tire.
Figure 3 shows photographs of damaged top breakers. Figure 4 shows photographs of damaged top breakers.

### Definitions

As used herein and in the claims, the "equatorial plane" of the tire is a plane that is perpendicular to the axis of rotation of the tire and passes through the center of the tire tread, the terms "axial" and "axially" refer to directions which are parallel to the axis of rotation of the tire and the terms "radial" and "radially" refer to directions that are radially toward or away from the axis of rotation of the tire. "Denier" is understood to mean the weight in grams of 9,000 meters of a yarn before the yarn has a twist imparted thereto. "Decitex" or "Dtex" is understood to mean the weight in grams of 10,000 meters of a yarn before the yarn has a twist imparted thereto.

### Description

There is disclosed a pneumatic tire, preferably a truck tire, comprising at least one pair of parallel annular beads, at least one carcass ply wrapped around said beads, at least two belts or breakers disposed over said carcass ply in a crown area of said tire, tread disposed over said belts or breakers, and sidewalls disposed between said tread and said beads, and wherein the radially top belt or breaker is reinforced with an organic polymer cord, wherein the organic polymer cord is chemically fused.

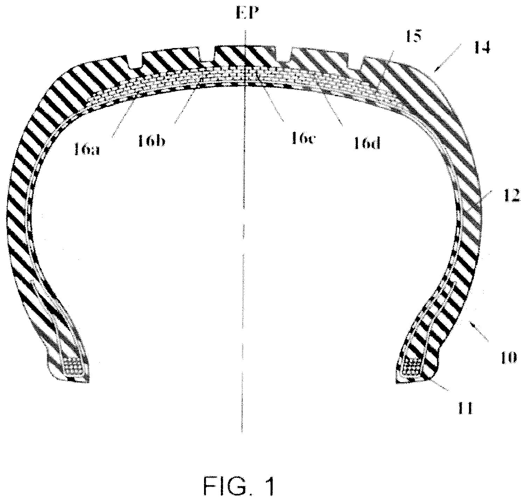

With reference to Figure 1, there is represented a portion of a pneumatic RMT tire 10 having a pair of substantially inextensible bead cores 11 which are axially spaced apart with at least one radial carcass ply 12 extending between the bead cores 11. The carcass plies are folded axially and radially outwardly about each of the bead cores and are reinforced by cords which are substantially parallel to each other and preferably make an angle comprised between 70° and 90° with the equatorial plane (EP) of the tire.

The crown area 14 of the tire 10 is reinforced by a belt assembly 15 located radially inwardly of the tire tread 13.

The belt assembly 15 is preferably essentially rigid and may comprise four concentric belt plies 16a, 16b, 16c, 16d. The belt plies as also known as breakers to those skilled in the art. Alternatively, the tire may also comprise only 2 such breakers or 3 or 5. The cord reinforcement members in the belt plies have usually an angle comprised between 5° and 35° with respect to the equatorial plane of the tire. The reinforcement members of the second and third belt, 16b and 16c are crossed, whereas the reinforcement members of the top belt ply 16d may have the same direction as those of the third belt, with respect to the equatorial plane. The reinforcement members of the top belt 16d or of any of the other belts may also make an angle in a range of from -5° to +5° such as 0° with respect to the equatorial plane.

The cords of the belt plies reinforcing the tire can be made of any suitable material, for example steel, rayon, polyester, polyamide or aromatic polyamide.

It lies within the scope of the present invention to replace the cords used for reinforcing the top belt ply, i.e., the radially outermost belt ply, also known as the top breaker or overlay, with the chemically fused cord described herein.

The chemically fused cord includes organic fiber cords that have been exposed to a chemical in such a way as to fuse together the individual fibers of the cord, to render it relatively stiff and fret resistant.

The organic fiber cord is a polyester cord. In one embodiment, the organic fiber cord is a polyethylene terephthalate (PET) or polyethylene naphthalate (PEN) fiber cord. In one embodiment, the organic fiber cord is PET.

The organic fiber cord has a cord weight suitable for use in a tire. The cord may include one or more fiber yarns, suitably twisted to form the cord. The weight of the cord may range from 6000 to 12000 decitex.

In one embodiment, the organic fiber cord is exposed to an isocyanate in the form of a liquid solution or dispersion. In one embodiment, the isocyanate is dissolved in an organic solvent, such as toluene, hexane, cyclohexane, or the like. In one embodiment, the isocyanate is dispersed in an aqueous dispersion.

The isocyanate is exposed to the organic fiber cord in a sufficient concentration to effect a chemical fusing together of the individual cord fibers. In one embodiment, the isocyanate is used in an organic solvent solution in a concentration ranging from 15 to 25 percent by weight, based on the total weight of the solution. In one embodiment, the isocyanate is used in an aqueous dispersion in a concentration ranging from 15 to 25 percent by weight, based on the total weight of the dispersion.

In one embodiment, the isocyanate is a blocked isocyanate. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc., and phenol formaldehyde blocked isocyanates as disclosed in US-A- 3,226,276; US-A-3,268,467; and US-A- 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε-caprolactam, δ-valerolactam, and butyrolactam, ureas such as urea and diethylene urea, oximes such as acetoxime, cyclohexanoxime, benzophenon oxime, and α-pyrolidon.

In one embodiment, the organic fiber cord is exposed to the isocyanate by dipping the cord into the solution or dispersion of isocyanate. In either case, the dry organic fiber cord is preferably drawn through a bath of isocyanate dipping liquid at a rate sufficient to preferably allow essentially complete penetration of the isocyanate-containing liquid into the voids between the individual cord fibers. In this way, it is intended that the isocyanate is exposed to all of the fiber surface area, and essentially full wetting of the fiber surfaces is achieved. The appropriate rate of cord movement though the isocyanate dipping liquid to achieve such penetration and wetting may be determined by one skilled in the art without undue experimentation.

After dipping in the isocyanate bath, the fiber cord is exposed to heat and/or air to allow removal of the solvent (or water in the case of an aqueous dispersion of isocyanate). Sufficient heat and time are used to allow the individual cord fibers to fuse together under the influence of the isocyanate. The chemically fused cord is then wound on a spool for storage.

As treated with the isocyanate, it is intended that the individual cord fibers will be fully fused together, so as to avoid fretting when used in as a top breaker in the tire. In particular, the chemically fused cord is sufficiently fused so as to be resistant to fretting upon damage to the top breaker during use, and resistant to fretting during repair of puncture areas in the top belt prior to retreading of the tire. Preferably, the chemically fused cord is fused through 75 percent of its thickness. More preferably, the chemically fused cord is fused through 90 percent of its thickness. In one embodiment, the chemically fused cord is fused through 95 percent of its thickness.

The chemically fused cord as treated with the isocyanate includes the organic fibers of the cord and the isocyanate. Other residual materials may also be included from the dipping liquid, such as dispersants in the case of aqueous dispersions. As such, these other materials are not contemplated to participate in the chemical fusing together of the individual cord fibers. The cord may then be said to consist essentially of the cord fibers and the isocyanate, with the assumption that the other materials present do not participate substantially in the chemical fusing of the fibers.

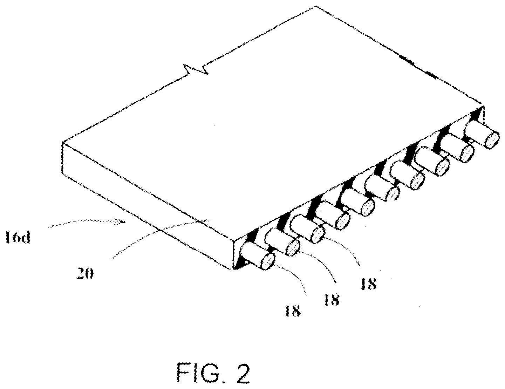

For use in the tire, the chemically fused cord is then preferably calendared with a rubber compound to form the top breaker. It may also be calendared to produce strips of reinforced rubber for applying a spiral overlay or a zig-zag belt ply for instance. Prior to calendaring, the chemically fused cord is preferably treated with an RFL (resorcinol formaldehyde latex) type adhesive to achieve good adhesion between the chemically fused cord and the rubber compound. The RFL adhesive is applied through a dipping process, leaving RFL adhesive disposed on at least part of the outer surface of the chemically fused cord. Calendaring of a suitable rubber compound onto the chemically fused cord is done as is known in the art. Figure 2 shows a cross section of a top breaker 16d. Chemically fused cords 18 are substantially parallel and embedded in rubber compound 20 following the calendaring process. The top breaker is used in a typical tire building process as is known in the art, to produce the tire 10 shown in Figure 1.

The invention is further illustrated by the following example.

### Example

In this example, the effect of using a chemically fused cord in a retreadable truck tire is illustrated. Polyethylene terephthalate cord was treated in a 20 percent by weight isocyanate solution in organic solvent to form the fused cord. The cord was then calendared into a rubber compound and fabricated as the top breaker in a radial medium truck tire. The tire was stressed to form punctures in the top belt. The tire tread was then skivved for retreading, leaving the exposed breaker punctures. The punctures were easily repaired using a grinding wheel, with no fretting of the fused fibers.

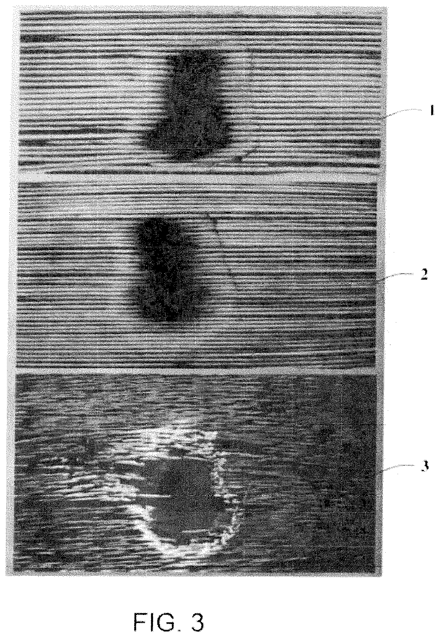

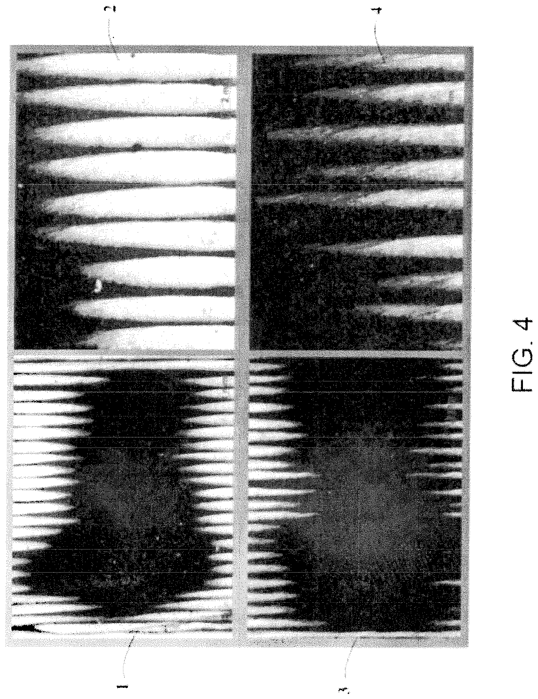

Figures 3 and 4 show photographs of the puncture areas of damage breakers after grinding. In Figure 3, the repaired areas of breakers made with the fused cord (1, 2) show no fretting, while that of a breaker made with steel cord (3) shows appreciable fretting. Figure 4 shows the areas of the fused cord breakers of Figure 3 in greater magnification. Photo 1 and 2 of Figure 4 correspond to photo 1 of Figure 3, and photos 3 and 4 of Figure 4 correspond to photo 2 of Figure 3. The photographs reveal that the fused cords retain their integrity even after grinding, indicating a high degree of fusing due to substantially complete penetration by the isocyanate.

## Claims

1. An organic polymer cord for use in a pneumatic tire, **characterised in that** the cord (18) consists of or consists essentially of polyester fibers and an isocyanate, wherein the fibers or at least some of the fibers of said cord (18) are fused together by the isocyanate through at least 50 percent of the cord thickness or diameter.

2. The organic polymer cord of claim 1 wherein the cord (18) is used in a pneumatic tire (10), the pneumatic tire (10) comprising at least one pair of parallel annular beads (11), at least one carcass ply (12) wrapped around said beads (11), at least two belts or breakers (16a, 16b, 16c, 16d) disposed over said carcass ply (12) in a crown area of said tire (10), a tread disposed over said belts or breakers (16a, 16b, 16c, 16d), and sidewalls disposed between said tread and said beads (11), wherein the radially top belt or breaker (16d) is reinforced with the organic polymer cord (18), and wherein the fibers or at least some of the fibers of the cord (18) are chemically fused.

3. The organic cord of claim 2, wherein the fibers are fused by the isocyanate through at least 75 percent, alternatively 90 percent, of the cord thickness or diameter.

4. The organic cord of claim 2, wherein the fibers are fused by the isocyanate through at least 95 percent of the cord thickness or diameter.

5. The organic cord of claim 2, wherein the organic polymer cord (18) is chemically fused with a blocked isocyanate.

## Patentansprüche

1. Organischer Polymerkord zur Anwendung in einem Luftreifen, **dadurch gekennzeichnet, dass** der Kord (18) aus Polyesterfasern und einem Isocyanat besteht oder im Wesentlichen besteht, wobei die Fasern oder mindestens einige der Fasern besagten Kords (18) mittels des Isocyanats durch mindestens 50 Prozent der Dicke oder des Durchmessers des Kords miteinander verschmolzen sind.

2. Organischer Polymerkord nach Anspruch 1, wobei der Kord (18) in einem Luftreifen (10) verwendet wird, wobei der Luftreifen (10) mindestens ein Paar parallele ringförmige Wülste (11), mindestens eine um diese Wülste (11) herumgeschlagene Karkassenlage (12), mindestens zwei Gürtel oder Zwischenbaulagen (16a, 16b, 16c, 16d), die über der Karkassenlage (12) in einem Zenitbereich des Reifens (10) angeordnet sind, eine über den Gürteln oder Zwischenbaulagen (16a, 16b, 16c, 16d) angeordnete Lauffläche, und zwischen der Lauffläche und den Wülsten (11) angeordnete Seitenwände umfasst, wobei der radial oberste Gürtel oder Zwischenbaulage (16d) mit dem organischen Polymerkord (18) verstärkt ist, und wobei die Fasern oder mindestens einige der Fasern des Kords (18) chemisch verschmolzen sind.

3. Organischer Kord nach Anspruch 2, wobei die Fasern mittels des Isocyanats durch mindestens 75 Prozent, alternativ 90 Prozent, der Dicke oder des Durchmessers des Kords verschmolzen sind.

4. Organischer Kord nach Anspruch 2, wobei die Fasern mittels des Isocyanats durch mindestens 95 Prozent der Dicke oder des Durchmessers des Kords verschmolzen sind.

5. Organischer Kord nach Anspruch 2, wobei der organische Polymerkord (18) mit einem blockierten Isocyanat chemisch verschmolzen ist.

## Revendications

1. Câblé polymère organique pour son utilisation dans un bandage pneumatique, **caractérisé en ce que** le câblé (18) est constitué ou est constitué à titre essentiel par des fibres de polyester et par un isocyanate, les fibres ou au moins une certaine quantité des fibres dudit câblé (18) étant fusionnées les unes aux autres via l'isocyanate sur au moins 50 % de l'épaisseur ou du diamètre du câblé.

2. Câblé polymère organique selon la revendication 1, dans lequel le câblé (18) est utilisé dans un bandage pneumatique (10), le bandage pneumatique (10) comprenant au moins une paire de talons annulaires parallèles (11), au moins une nappe de carcasse (12) qui entoure lesdits talons (11), au moins deux ceintures ou deux nappes de sommet (16a, 16b, 16c, 16d) qui sont disposées par-dessus ladite nappe de carcasse (12) dans une zone de sommet dudit bandage pneumatique (10), une bande de roulement disposée par-dessus lesdites ceintures ou lesdites nappes de sommet (16a, 16b, 16c, 16d), et des flancs disposés entre ladite bande de roulement et lesdits talons (11), dans lequel la nappe de sommet ou la ceinture supérieure en direction radiale (16d) est renforcée avec le câblé polymère organique (18), et dans lequel les fibres ou au moins un certain nombre des fibres du câblé (18) sont fusionnées par voie chimique.

3. Câblé organique selon la revendication 2, dans lequel les fibres sont fusionnées via l'isocyanate sur au moins 75 %, en variante sur 90 % de l'épaisseur ou du diamètre du câblé.

4. Câblé organique selon la revendication 2, dans lequel les fibres sont fusionnées via l'isocyanate sur au moins 95 % de l'épaisseur ou du diamètre du câblé.

5. Câblé organique selon la revendication 2, dans lequel le câblé polymère organique (18) est fusionné par voie chimique avec un isocyanate bloqué.
